# EUROPEAN PATENT APPLICATION

(11) **EP 1 950 989 A1**
(43) Date of publication of application: **30.07.2008**
(21) Application number: 06811018.8
(22) Date of filing: 02.10.2006
(51) Int. Cl.: H04Q 7/34, H04Q 7/38

(54) **MOBILE COMMUNICATION SYSTEM, CORE NETWORK, RADIO NETWORK SYSTEM, AND METHOD FOR SELECTING NETWORK FOR CONTAINING THE SYSTEM**

(30) Priority: 16.11.2005 JP 2005330948
(71) Applicant: NEC Corporation, Minato-ku Tokyo 108-8001 (JP)
(72) Inventor: OHNISHI, Masato, Tokyo 108-8001 (JP); TAMURA, Toshiyuki, Tokyo 108-8001 (JP)
(74) Representative: Wenzel & Kalkoff
(86) International application number: PCT/JP2006/319670
(87) International publication number: WO 2007/058024

(57) **Abstract**

Upon receipt of a location registration request from a mobile terminal, a core network registers the mobile terminal in a node decided according to a subscriber contract of the mobile terminal. Moreover, the core network transmits a temporary subscriber identifier for identification of containing in the node to the mobile terminal. A radio network relays a message signal between a mobile terminal and a core network. When a controller receives a message signal containing the temporary subscriber identifier from the mobile terminal, the controller identifies the node containing the mobile terminal according to the temporary subscriber identifier and transmits the message signal to the node.

## Description

### TECHNICAL FIELD

The present invention relates to a mobile communication system which can select a network for containing a mobile terminal from among a plurality of networks.

### BACKGROUND ART

In recent years, mobile communication services have become remarkably popular, and services have been widespread, such as 3rd Generation Partnership Project (3G), Wireless Local Area Network (WLAN) and the like.

These wireless services are provided in coverage areas which overlap one another, so that pluralities of different wireless services are simultaneously provided at the same locations. In this way, the user of a portable terminal can select and utilize any of a plurality of services (see, for example, JP-2005-252493-A).

As additional services provided for 3G portable terminals, IN (Intelligent Network) based services have been employed in addition to services (Call Forwarding, Call Waiting and the like) of the GSM (Global System for Mobile communications) standard. The IN system is a system which is intended to eliminate the need for changing the software of an exchanger in the event of the addition and expansion of services by assigning service-related control as well as data holding and management functions to a node different from the exchanger.

Communication services and additional services as mentioned above can be selectively provided for each portable terminal. For this purpose, a plurality of networks are provided on a system side for providing portable terminals with communication services and additional services, such that a network is selected therefrom for connection with each portable terminal, thus making it possible to selectively provide a variety of services. On a portable terminal side, functional differences are provided in accordance with utilized services, and a distinction can be made by a transmission signal. A network for containing a portable terminal is selected in accordance with a signal from the portable terminal.

### DISCLOSURE OF THE INVENTION

In the mobile communication services described above, when services provided to portable terminals are graded, functional differences must be made not only on a core network but also on portable terminals in accordance with their grades.

Also, the user is required not only to change a contract with a portable telephone operator but also to change a portable terminal in order to change the grade of services to be received.

It is an exemplary object of the present invention to provide a mobile communication system which is capable of selecting a network for containing a portable terminal in accordance with a contract of a user irrespective of portable terminals.

The mobile communication system according to an exemplary aspect of the present invention is a mobile communication system for providing a plurality of services to a portable terminal in accordance with a subscriber contract, which comprises a core network and a radio network.
The core network comprises a plurality of nodes each having a function of providing different services to the portable terminal. The radio network comprises a controller for connection with a plurality of nodes in the core network.

The core network, upon receipt of a location registration request from a portable terminal, registers the portable terminal in a node which is determined on the basis of a subscriber contract of the portable terminal. In this event, the core network transmits temporary subscriber identification information to the portable terminal such that the temporary subscriber identification information allows recognition that the portable terminal is contained in the node. The radio network relays a message signal between the portable terminal and the core network. In this event, the controller, upon receipt of a message signal including temporary subscriber identification information from the portable terminal, identifies a node for containing the portable terminal based on the temporary subscriber identification information, and transmits the message signal to the node.

Thus, according to the present invention, the core network is provided with a plurality of nodes which provide different services, and the controller of the radio network selects a node for transmitting a message signal from a mobile terminal in accordance with subscriber identification information, so that a node for containing the portable terminal can be selected in accordance with the user's contract information independently of the functions of the portable terminal.

### BRIEF DESCRIPTION OF THE DRAWINGS

[Fig. 1]
   A block diagram showing the configuration of a mobile communication system according to one exemplary embodiment of the present invention
[Fig. 2]
   A block diagram showing the configuration of MSC according to one exemplary embodiment of the present invention
[Fig. 3]
   A block diagram showing the configuration of RNC according to one exemplary embodiment of the present invention
[Fig. 4]
   A block diagram showing the configuration of a portable terminal according to one exemplary embodiment of the present invention
[Fig. 5]
   A sequence chart showing exemplary operations of the mobile communication system according to one exemplary embodiment of the present invention
[Fig. 6]
   A sequence chart showing exemplary operations of the mobile communication system according to one exemplary embodiment of the present invention
[Fig. 7]
   A sequence chart showing other exemplary operations of the mobile communication system according to one exemplary embodiment of the present invention
[Fig. 8]
   A sequence chart showing other exemplary operations of the mobile communication system according to one exemplary embodiment of the present invention

### BEST MODE FOR CARRYING OUT THE INVENTION

Exemplary Embodiments of the present invention will be described with reference to the drawings.

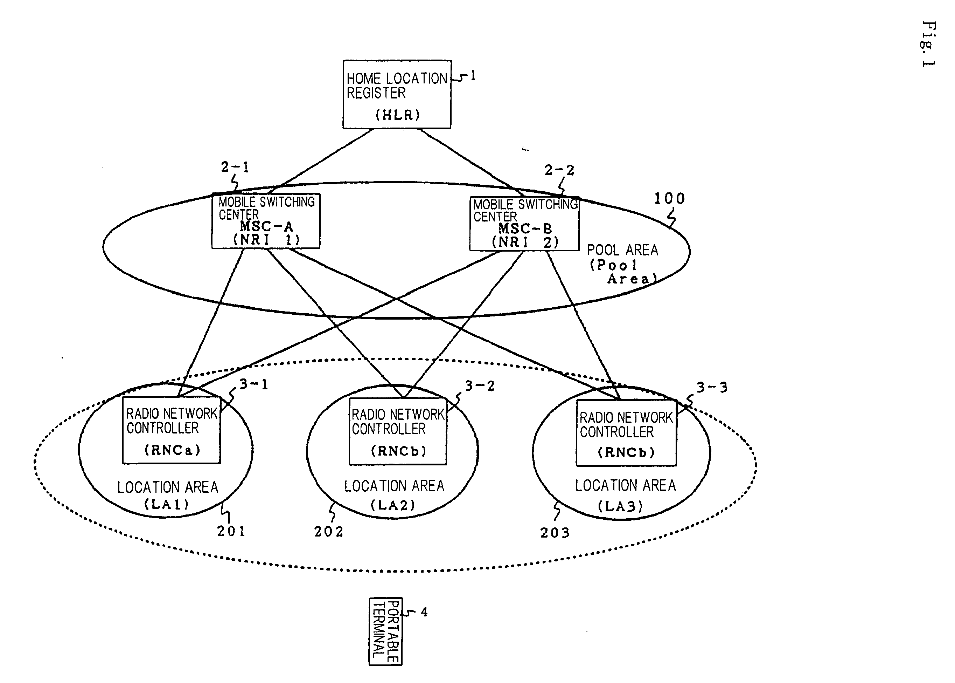

Fig. 1 is a block diagram showing the configuration of a mobile communication system according to one exemplary embodiment of the present invention. In Fig. 1, the mobile communication system according to this exemplary embodiment comprises home location register (HLR (Home Location Register)) 1, mobile switching centers (MSC (Mobile Switching Centre)-A, B) 2-1, 2-2, radio network controllers (RNC (Radio Network Controller)a-c) 3-1 - 3-3, and portable terminal 4.

MSC-A 2-1, MSC-B 2-2 are nodes of a core network. RNC is a node of a radio network system (RNS (Radio Network System)). Both of MSC-A 2-1 and MSC-B 2-2 individually contain RNCa 3-1, RNCb 3-2, RNCc 3-3, and MSC-A 2-1 and MSC-B 2-2 make up pool area (Pool Area) 100.

RNCa 3-1, RNCb 3-2, RNCc 3-3 make up location areas (LA (Location Area)1 201, LA2, 202, LA3 203, respectively. Then, RNCa 3-1, RNCb 3-2, RNCc 3-3 can select MSC to be accessed based on TMSI (Temporary Mobile Subscriber Identity: temporary user identifier) with an lu_Flex function. When no MSC to be accessed can be selected from TMSI, assume that RNCa 3-1, RNCb 3-2, RNCc 3-3 access MSC-A 2-1 which is set by default.

NRI (Network Resource Identifier) which is set to TMSI given to a portable terminal by MSC is a value indicative of MSC which contains the portable terminal, and differs depending on subscriber contract information. Assume herein that "NRI=1" indicates MSC-A 2-1, and "NRI=2" indicates MSC-B 2-2. RNC can select MSC which contains subordinate portable terminals that have the lu-Flex function.

In this exemplary embodiment, with the functions mentioned above, when there are differences in services provided to portable terminals on an MSC-by-MSC basis, particular portable terminals alone can be contained in MSC.

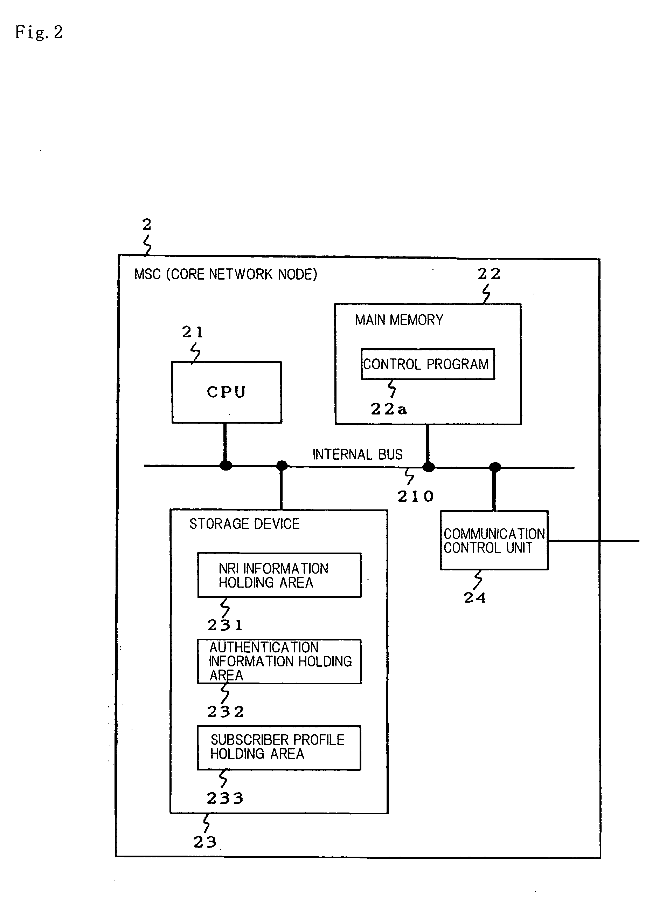

Fig. 2 is a block diagram showing the configuration of MSC according to this exemplary embodiment. In Fig. 2, MSC 2 comprises CPU (central processing unit) 21, main memory 22 for storing control program 22a executed by CPU 21, storage device 23 for use as a work area when CPU 21 executes control program 22a, and communication control unit 24 for controlling communications between HLR 1 and RNCa-c 3-1 - 3-3.

Storage device 23 comprises NRI information holding area 231 for holding NRI information set in an own device, authentication information holding area 232 for holding authentication information for authenticating portable terminal 4, and subscriber profile holding area 233 for holding a subscriber profile of the user of portable terminal 4. CPU 21, main memory 22, storage device 23, and communication control unit 24 are connected to internal bus 210, respectively. Also, MSC-A 2-1 and MSC-B 2-2 shown in Fig. 1 are similar in configuration to MSC 2 shown in Fig. 2.

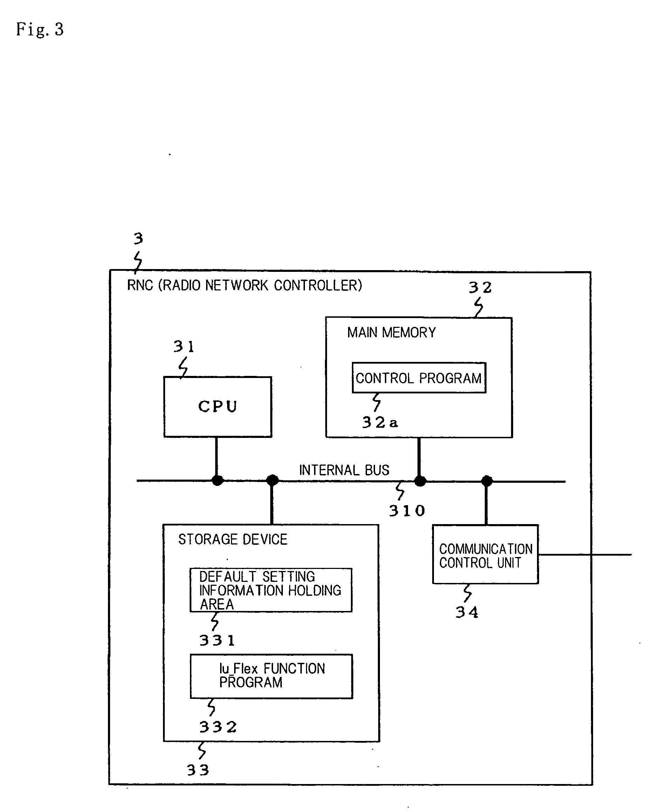

Fig. 3 is a block diagram showing the configuration of RNC according to this exemplary embodiment. In Fig. 3, RNC 3 comprises CPU 31, main memory 32 for storing control program 32a executed by CPU 31, storage device 33 for use as a work area when CPU 31 executes control program 32a, and communication control unit 34 for controlling communications between MSC-A 2-1 and MSC-B 2-2 and Node-B (radio base station device), not shown.

Storage device 33 comprises default setting holding area 331 for holding NRI which is set as default in the own device, and lu-Flex function program holding area 332 for holding an lu-Flex function program for implementing the lu-Flex function. CPU 31, main memory 32, storage device 33, and communication control unit 34 are connected to internal bus 310, respectively. Also, RNCa-c 3-1 - 3-3 shown in Fig. 1 are similar in configuration to RNC 3 shown in Fig. 3.

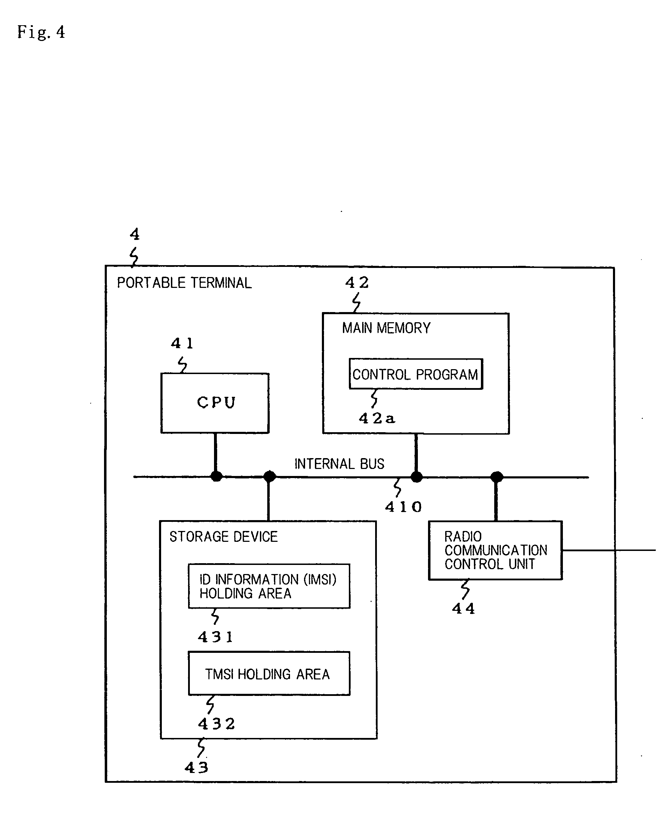

Fig. 4 is a block diagram showing the configuration of a portable terminal according to this exemplary embodiment. In Fig. 4, portable terminal 4 comprises CPU 41, main memory 42 for storing control program 42a executed by CPU 41, storage device 43 for use as a work area when CPU 41 executes control program 42a, and radio communication control unit 44 for controlling radio communications between RNC 3 and Node-B.

Storage device 43 comprises ID information (IMSI) holding area 431 for holding IMSI (International Mobile Subscriber Identity: fixedly assigned user identifier) set as ID (identification information) of storage device 43, and TMSI holding area 432 for holding TMSI sent through RNC 3. CPU 41, main memory 42, storage device 43, radio communication control unit 44 are connected to internal bus 410, respectively.

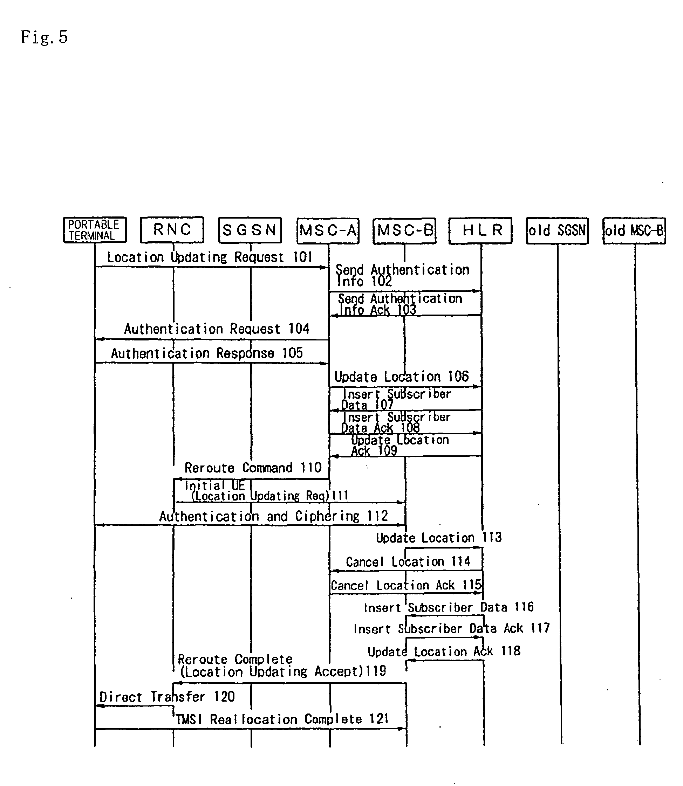

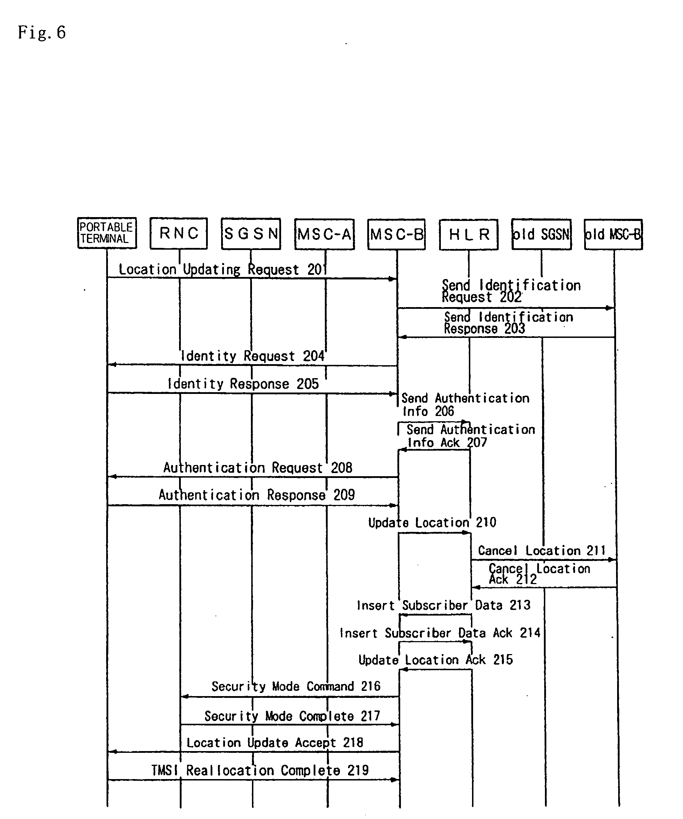

Figs. 5 and 6 are sequence charts showing exemplary operations of the mobile communication system according to this exemplary embodiment. Referring to Figs. 5 and 6, a description will be given of a CS (Circuit Switched) single attach (Attach)/location registration process when there is no Gs-IF between MSC and SGSN (Serving GPRS Support Node). Fig. 5 shows a sequence of CS attach when Location Updating Request specifying IMSI is received from a portable terminal. The attach is a procedure for managing enabling/disabling of termination.

When CS attach is started, the portable terminal transmits Location Updating Request (location updating request: 101) which sets IMSI. Here, since NRI is not set in Location Update Request (101), RNC relays a signal toward MSC-A which is set in RNC as default.

Upon receipt of Location Updating Request (101), MSC-A searches subscriber profiles held by MSC-A by using IMSI set as ID (IDentifier) of the portable terminal. When there are no subscriber profiles, MSC-A transmits Send Authentication Info (Authentication information query: 102) to HLR to query for information required to authenticate the portable terminal.

HLR transmits authentication information to MSC-A in Send Authentication Info Ack (authentication information query response: 103).
MSC-A authenticates the portable terminal using the obtained authentication information through each of Authentication Request (authentication request: 104) and Authentication Response (authentication response: 105) procedures.

When the authentication is successful, MSC-A transmits Update Location (location update: 106) to HLR to perform location registration of the portable terminal to HLR. Subsequently, a subscriber profile is downloaded to MSC-A by transmitting and receiving Insert Subscriber Data (subscriber information write request: 107) and Insert Subscriber Data Ack (subscriber information write response: 108) between MSC-A and HLR.

Finally, when MSC-A has received Update Location Ack (location registration response: 109) from HLR, the location registration process is terminated between MSC-A and HLR.

Upon recognizing that MSC which contains the portable terminal is MSC-B from contract information from the subscriber profile downloaded from HLR, MSC-A transmits Reroute Command (110) to RNC, and RNC transmits Initial UE (portable terminal initialization: 111) including Location Update Request (location registration request) to MSC-B.

After performing Authentication and Ciphering (authentication/ciphering processing: 112) between MSC-B and the portable terminal, MSC-B transmits Update Location (location registration: 113) to HLR. Upon receipt of Update Location (location registration: 113), HLR transmits Cancel Location (location cancel: 114) to MSC-A which is old MSC that contained the portable terminal.

MSC-A deletes the subscriber profile of the portable terminal, and return Cancel Location Ack (Location Cancel Response: 115) to HLR. Subsequently, HLR transmits Insert Subscriber Date (subscriber information write request: 116) which sets subscriber data to MSC-B which is new MSC for containing the portable terminal.

After creating the subscriber profile, MSC-B returns Insert Subscriber Data Ack (subscriber information write response: 117). Upon receipt of Insert Subscriber Data Ack (117), HLR returns Update Location Ack (location registration response: 118) to MSC-B.

MSC-B assigns TMSI to the portable terminal, and returns Reroute Complete (reroute complete: 119) which sets Location Updating Accept (location registration accept) to RNC, while RNC notifies the portable terminal of TMSI through Direct Transfer (TMSI notification: 120). Upon receipt of TMSI, the portable terminal transmits TMSI Reallocation Complete (TMSI relocation complete: 121) to MSC-A. After the location registration process has been completed, the portable terminal makes a communication using TMSI which has been notified thereto through the foregoing procedure.

Next, a description will be given of a location registration process when a portable terminal sets TMSI with reference to Fig. 6. Fig. 6 shows a sequence in the case of Inter VLR (Visitor Location Register).

When the CS attach is started, the portable terminal transmits Location Updating Request (location updating request: 201) in which TMSI held therein is set. RNC recognizes NRI in TMSI set in Location Updating Request (201), and transfers a signal to that MSC. In this event, the signal is transmitted to MSC-B.

Upon receipt of Location Updating Request (201), MSC-B recognizes location registration of Inter VLR because old LAI (old LAI (Location Area Identity)) set in Location Updating Request (201) is not LAI of its own MSC-B. MSC-B searches old MSC-B (old MSC-B) from old LAI, and transmits Send Identification Request (authentication information query: 202) to query for information required to authenticate the portable terminal.

Old MSC-B transmits the authentication information to MSC-B in Send Identification Response (authentication information query response: 203). When a determination result of Send Identification Response (203) is abnormal, old MSC-B queries the portable terminal for IMSI through procedures of Identity Request (identity request: 204) and Identity Response (identity response: 205). Also, when information required for authentication is lacking, old MSC-B transmits Send Authentication Info (authentication information query: 206) to HLR to query for information required to authenticate the portable terminal.

HLR transmits the authentication information to MSC-B through Authentication Info Ack (authentication information query response: 207). When information required for authentication processing is ready, MSC-B authenticates the portable terminal through each of the Authentication Request (authentication request: 204) and Authentication Response (authentication response: 205) procedures. When the authentication is successful, MSC-B transmits Update Location (location update: 210) to HLR to perform location registration of the portable terminal in HLR.

Since it appears to be a normal Inter VLR location registration process from HLR, the subscriber profile of old MSC is deleted by transmitting and receiving Cancel Location (location cancel: 211) and Cancel Location Ack (location cancel response: 212) to and from old MSC-B which is old MSC.

Subsequently, HLR transmits and receives Insert Subscriber Data (subscriber information write request: 213) and Insert Subscriber Date Ack (subscriber information write response: 214) to and from MSC-B to download the subscriber profile to MSC-B. Finally, MSC-B receives Update Location Ack (location update response: 215) from HLR to complete the location registration process with HLR.

Upon recognizing that MSC-B is MSC for containing the portable terminal from contract information in the downloaded subscriber profile, MSC-B gives TMSI in which "2" is set to NRI, performs ciphering processing with the portable terminal, and then transmits Location Updating Accept (location registration accept: 218) in which TMSI is set to the portable terminal. In the ciphering processing, Security Mode Command (security mode command: 216), Security Mode Complete (security mode complete: 217) are transmitted and received.

Upon receipt of TMSI, the portable terminal transmits TMSI Reallocation Complete (TMSI relocation complete: 219) to MSC-B. After the location registration process has been completed, the portable terminal makes a communication using TMSI which has been notified through the foregoing procedure.

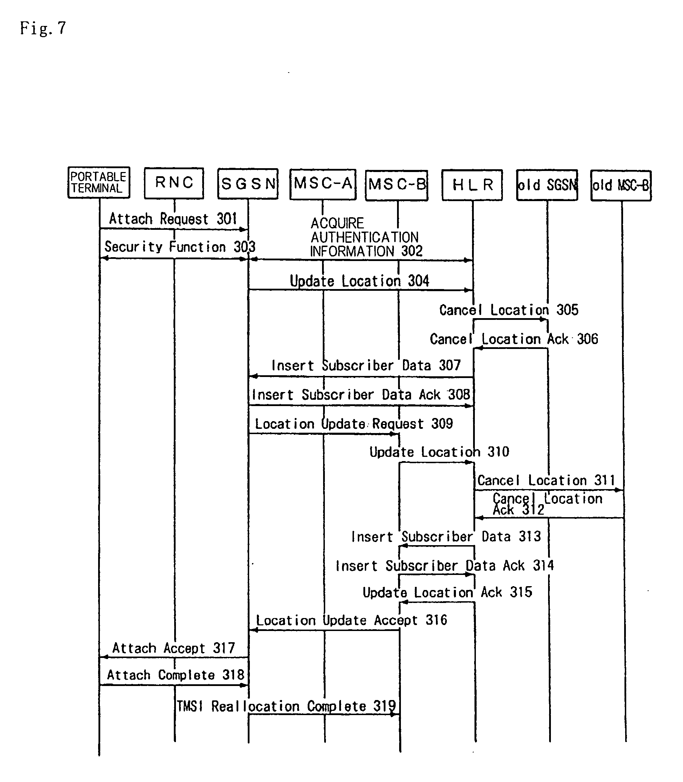

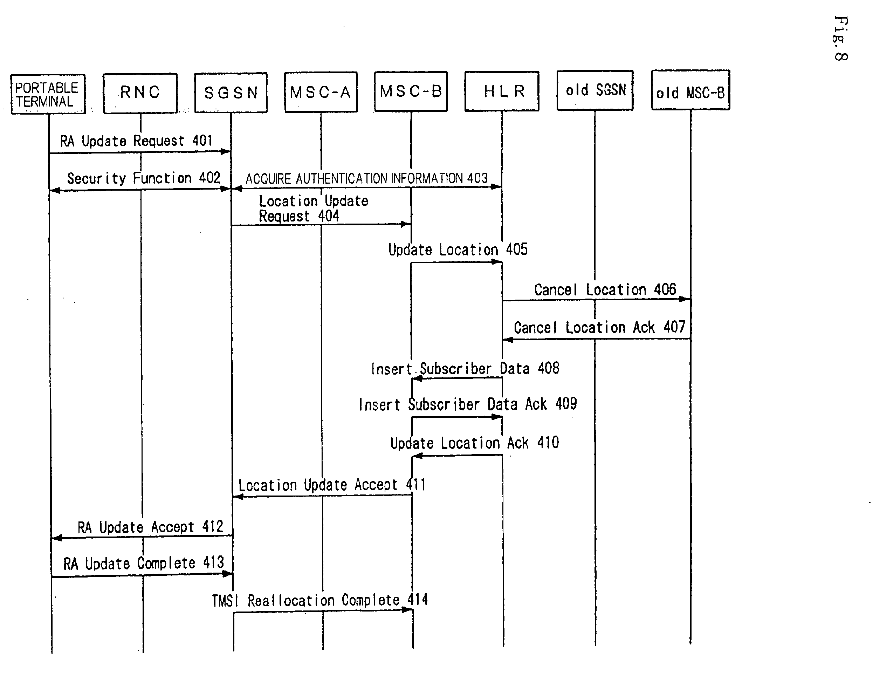

Figs. 7 and 8 are sequence charts showing other exemplary operations of the mobile communication system according to this exemplary embodiment. Referring to Figs. 7 and 8, a description will be given of a combined attach (Combined Attach)/location registration process when MSC and SGSN are associated through Gs-IF.

Fig. 7 shows a combined attach sequence of Inter VLR/Inter SGSN. This sequence shows a procedure when a portable terminal does not hold TMSI and is going to set IMSI.

The portable terminal transmits Attach Request (attach request: 301) in which IMSI is set to SGSN. SGSN acquires authentication information from HLR through authentication information acquisition (302), and authenticates the portable terminal with Security Function (security function: 303). When the authentication is successful, SGSN transmits Update Location (location update: 304) to HLR.

When the profile of the subscriber exists in old SGSN (old SGSN), HLR transmits and receives Cancel Location (location cancel 305) and Cancel Location Ack (location cancel response: 306) to and from old SGSN to delete the subscriber profile of the old SGSN. Subsequently, HLR transmits and receives Insert Subscriber Data (subscriber information write request: 307) and Insert Subscriber Data Ack (subscriber information write response: 308) to and from SGSN to download the subscriber profile to SGSN.

SGSN determines MSC for containing the portable terminal from contract information of the downloaded subscriber profile, and transmits Update Location (location update: 309) to MSC-B. Upon receipt of Update Location (309), MSC-B performs a normal location registration process (310 - 315).

Upon recognizing that MSC-B is MSC for containing the portable terminal from the contract information in the subscriber profile downloaded from HLR, MSC-B gives TMSI in which "2" is set to NRI, and transmits Location Update Accept (location update accept: 316) in which TMSI is set to SGSN.

SGSN transmits P-TMSI (Packet TMSI) given by SGSN and Attach Accept (attach response: 317) in which TMSI given by MSC-B is set to the portable terminal, while the portable terminal returns Attach Accept (attach response: 318).

SGSN transmits TMSI Reallocation Accept (TMSI relocation complete: 319) to MSC-B to complete the combined attach process.

Finally, a description will be given of a Combined RA/LA Update procedure of Inter VLR/Intra SGSN with reference to Fig. 8. This sequence shows when P-TMSI held by a portable terminal is set.

The portable terminal transmits Attach Request (attach request: 401) in which P-TMSI is set to SGSN. SGSN authenticates the portable terminal with Security Function (security function: 402). Authentication information is acquired from HLR through a procedure of authentication information acquisition (403).

SGSN determines Intra SGSN from P-TMSI and old RAI (Routing Area Identity), determines MSC for containing the portable terminal from a subscriber profile held in SGSN, and transmits Update Location (location update: 405) to MSC-B.

Upon receipt of Update Location (405), MSC-B performs a normal location registration process (406 - 410). Upon recognizing that MSC-B is MSC for containing the portable terminal from contract information in the subscriber profile downloaded from HLR, MSC-B gives TMSI in which "2" is set to NRI, and transmits Location Update Accept (location update accept: 411) in which TMSI is set to SGSN.

SGSN transmits P-TMSI given by SGSN and Attach Accept (attach accept: 412) in which TMSI given by MSC-B is set to the portable terminal, while the portable terminal returns Attach Accept (attach accept: 413). SGSN transmits TMSI Reallocation Accept (TMSI relocation accept: 414) to MSC-B to complete the Combined RA/LA Update process.

If the portable terminal holds TMSI that conforms to the contract of the subscriber in the attach/location registration process described above, origination related services from the portable terminal such as subsequent origination, SMS (Short Message Service) and the like can be processed by MSC which can provide services conforming to the contract with TMSI and the lu-Flex function of RNC. On the other hand, termination related services can be solved by MSC which contains subscribers in HLR, so that the services can be provided through existing processing.

In this way, in this exemplary embodiment, a core network is provided with a plurality of nodes having different service grades, a node for containing a portable terminal is selected by using the lu-Flex function of RNC, and a signal is sent to that node, thus making it possible to select a node for containing the portable terminal based on the user's contract information independently of the functions of the portable terminal. Therefore, when a portable telephone operator selectively provides users with a plurality of services having different grades, a service can be readily selected simply by setting the contract contents. Also, the user of the portable terminal can select a desired service from a plurality of services provided by a portable telephone operator without changing the portable terminal.

In this exemplary embodiment, a description has been given of a method of selecting a node for containing a portable terminal by providing a functional difference to MSC which is a core network node of line switching and by utilizing TMSI given by MSC and the lu-Flex function. However, even in a core network node of packet switching, by providing SGSN which gives P-TMSI with functions similar to the aforementioned MSC, a PS (Packet Switched) subscriber containing network can be selected in accordance with contract information.

## Claims

1. A mobile communication system for providing a plurality of services to a mobile terminal in accordance with a subscriber contract, said mobile communication system comprising:
a core network comprising a plurality of nodes each providing said portable terminal with different services, and responsive to a location registration request from said portable terminal to register said portable terminal into a node which is determined on the basis of a subscriber contract of said portable terminal and to transmit temporary subscriber identification information to said portable terminal, said temporary subscriber identification information for identifying that said portable terminal is contained in said node; and
a radio network which relays a message signal between said portable terminal and said core network, comprising a controller for connection with said plurality of nodes in said core network, wherein during the relay, said controller identifies a node for containing said portable terminal based on the temporary subscriber identification information upon receipt of a message signal including the temporary subscriber identification information from said portable terminal, and transmits the message signal to said node.

2. The mobile communication system according to claim 1, wherein said core network further comprises a first location management device which manages a location in a line switched communication of said portable terminal, wherein a node which receives a location registration request from said portable terminal requests said first location management device for an update of a location registration.

3. The mobile communication system according to claim 1, wherein:
said radio network transmits the location registration request to a node determined by default when the location registration request received by said controller from said portable terminal includes fixed subscriber identification information instead of the temporary subscriber identification information, and
said core network, upon receipt of the location registration request including the fixed subscriber identification information from said radio network, investigates a subscriber contract of a portable terminal which has transmitted the location registration request, from the fixed subscriber identification information, determines a node for containing said portable terminal based on the acquired subscriber contract, registers said portable terminal in said node, and transmits temporary subscriber identification information to said portable terminal, said temporary subscriber identification information for identifying that said portable terminal is contained in said node.

4. The mobile communication system according to claim 1, wherein:
said core network, upon receipt of the location registration request including the temporary subscriber identification information from said radio network, determines a node for containing a portable terminal which has transmitted the location registration request from the temporary subscriber identification information, registers said portable terminal in said node, and transmits new temporary subscriber identification information to said portable terminal, said new temporary subscriber identification information for identifying that said portable terminal is contained in said node.

5. The mobile communication system according to claim 1, wherein said core network further comprises a first location management device which manages a location in a line switched communication of said portable terminal, and a second location management device which manages a location in a packet switched communication of said portable terminal, wherein when said second location management device receives a location registration request from said portable terminal, said core network transmits the temporary subscriber identification information and temporary subscriber identification information for the packet switched communication to said portable terminal in association with said first location management device.

6. The mobile communication system according to claim 5, wherein:
when the location registration request received by said second location management device from said portable terminal includes fixed subscriber identification information instead of the temporary subscriber identification information for the packet switched communication, said second location management device requests said first location management device for an update of a location registration.

7. The mobile communication system according to claim 5, wherein:
when the location registration request received by said second location management device from said portable terminal includes a temporary subscriber identification information for packet switched communication, said second location management device identifies a node for containing said portable terminal from the temporary subscriber identification information for packet switch, and requests said node for an update of location registration, and said node requests said first location management device for an update of location registration.

8. A core network in a mobile communication system for providing a plurality of services to a portable terminal in accordance with a subscriber contract, said core network **characterized by** comprising:
a plurality of nodes providing different services from one another to said portable terminal,
wherein upon receipt of a location registration request from said portable terminal, said portable terminal is registered in a node which is determined on the basis of a subscriber contract of said portable terminal, and temporary subscriber identification information is transmitted to said portable terminal such that the temporary subscriber identification information allows to identify that said portable terminal can be contained in said node.

9. A radio network for relaying a message signal between a plurality of nodes in a core network and a portable terminal in a mobile communication system for providing a plurality of services to said portable terminal in accordance with a subscriber contract, said radio network **characterized by** comprising:
a controller which connects with said plurality of nodes in said core network, wherein during a relay of the message signal, said controller identifies a node for containing said portable terminal based on the temporary subscriber identification information upon receipt of a message signal including the temporary subscriber identification information from said portable terminal, and transmits the message signal to said node.

10. A service control method for a mobile communication system for providing a plurality of services to a portable terminal in accordance with a subscriber contract with a plurality of nodes each having a function of providing different services to said portable terminal, wherein:
in a core network,
upon receipt of a location registration request from said portable terminal, registering said portable terminal in a node determined on the basis of a subscriber contract of said portable terminal, and transmitting temporary subscriber identification information to said portable terminal such that the temporary subscriber identification information allows to identify that said portable terminal can be contained in said node, and
in a radio network,
when a message signal is relayed between said portable terminal and said core network, upon receipt of a message signal including the temporary subscriber identification information from said portable terminal, identifying a node for containing said portable terminal based on the temporary subscriber identification information, and transmitting the message signal to said node.
